# EUROPÄISCHE PATENTSCHRIFT

(11) **EP 3 104 675 B1**
(45) Veröffentlichungstag und Bekanntmachung des Hinweises auf die Patenterteilung: **14.03.2018**
(21) Anmeldenummer: 15704706.9
(22) Anmeldetag: 27.01.2015
(51) Int. Cl.: A01B 63/00, G05B 19/00

(54) **BEDIENTERMINAL EINER LANDMASCHINE MIT HYPERVISOR-SOFTWARE**
OPERATING TERMINAL OF AN AGRICULTURAL MACHINE WITH HYPERVISOR SOFTWARE
TERMINAL DE COMMANDE D'UNE MACHINE AGRICOLE ÉQUIPÉ D'UN LOGICIEL HYPERVISEUR

(30) Priorität: 31.01.2014 DE 102014001154
(43) Veröffentlichungstag der Anmeldung: 21.12.2016
(73) Patentinhaber: AgBRAIN - Agritechnical Basic Research for Advanced Innovation GmbH, 49076 Osnabrück (DE)
(72) Erfinder: AHLERS, Florian, 49078 Osnabrück (DE)
(74) Vertreter: Weeg, Thomas
(86) Internationale Anmeldenummer: PCT/EP2015/000141
(87) Internationale Veröffentlichungsnummer: WO 2015/113752

(56) Entgegenhaltungen:
- CN-A- 101 292 282
- DE-U1-202008 007 912
- DE-U1-202012 006 899
- JP-A- 2012 168 755
- US-A1- 2011 224 873
- US-A1- 2012 159 469

## Beschreibung

Die vorliegende Erfindung bezieht sich auf ein Bedienterminal einer Landmaschine mit einer Computerhardware und einer Computersoftware zur Bedienung der elektrischen und/oder elektronischen Funktionen der angeschlossenen Landmaschine.

Gattungsgemäße Bedienterminals sind beispielsweise aus den Schriften DE 20 2008 007 912 und DE 20 2012 006 899 bekannt. Bei einem Bedienterminal kann es sich um ein fest in einem Traktor oder einer selbstfahrenden Arbeitsmaschine eingebautes oder nachträglich in der Fahrerkabine nachgerüstetes landtechnisches Terminal zur Bedienung des Traktors, der selbstfahrenden Arbeitsmaschine und/oder einem Gerät handeln. Bei dem Gerät kann es sich um eine angehängte landtechnische Maschine, eine landtechnische Anbaumaschine oder einen landtechnischen Sensor handeln. Ein Bedienterminal kann zur Steuerung von Funktionen einer selbstfahrenden Arbeitsmaschine oder eines Traktors als Landmaschinen eingesetzt sein, oder das Bedienterminal wird verwendet, um eine an eine Zug- oder Trägermaschine nachträglich anbaubare andere Maschine zu steuern. Die Bedienterminals werden nicht nur von den Herstellern von selbstfahrenden Arbeitsmaschinen oder Traktoren, sondern auch von Herstellern von Anbaugeräten, wie beispielsweise Ballenpressen, Mähwerken, Wendern, Schwadern, Sämaschinen, Dünge- und Spritzmaschinen, Maschinen zur Bodenbearbeitung und dergleichen, hergestellt und programmiert, damit über das Bedienterminal und die darauf installierte Anwendungssoftware Funktionen der selbstfahrenden Arbeitsmaschine, eines Traktors oder eines Anbaugeräts gesteuert werden können.

Bei Landmaschinen stellt sich das Problem, dass diese häufig erst durch den Einsatz zusätzlicher Anwendungssoftware optimal betreibbar sind. Die Bedienfunktionen dieser Anwendungssoftware gehen über den Funktionsumfang hinaus, den die in den Bedienterminals herstellerseitig installierten Softwareprogramme mit Anwendungssoftware zur Bedienung der elektrischen und elektronischen Grundfunktionen der jeweiligen Landmaschine bieten. Die zusätzlich erforderliche Anwendungssoftware kann sich auf die Bereiche der Logistik, Dokumentation, betriebswirtschaftlichen Optimierung oder für Vorberechnungen zur Konfiguration der Landmaschine beziehen. Auch unterstützende Anwendungssoftware wie Chat-, E-Mail- oder Navigations-Programme sind gefragt.

Die von den Herstellern in den Verkehr gebrachten Bedienterminals stellen von ihrer Computersoftware her üblicherweise geschlossene Systeme dar, auf denen nur die herstellerseitig installierten Softwareprogramme betrieben werden können. Eine nachträgliche Installation von Anwendungssoftware fremder Hersteller, die das herstellerseitig installierte Paket der Anwendungssoftware ergänzt, ist insbesondere aus Sicherheitsgründen nicht möglich. So sind die nutzbaren Funktionen eines Bedien-terminals auf die Funktionen beschränkt, die der Hersteller durch die Installation seiner Anwendungssoftware auf dem Bedienterminal vorgesehen hat. Dadurch entfällt die Möglichkeit, die Funktionalität des Bedienterminals für den Kunden durch die nachträgliche Installation von Anwendungssoftware zu erweitern. Dadurch kann die Landmaschine nicht mit maximaler Effizienz betrieben werden, und es müssen zusätzliche Geräte auf der Landmaschine installiert werden, auf denen die entsprechende Anwendungssoftware betrieben werden kann, wenn die gewünschte Funktion beim Betrieb der Landmaschine nutzbar sein soll. So kommt es häufig dazu, dass in der Fahrerkabine einer Landmaschine mehrere Bediengeräte nebeneinander installiert sind, beispielsweise neben dem Bedienterminal des Traktorherstellers ein weiteres Bedienterminal für eine angebaute Maschine, ein Navigationsgerät und ein Datenlogger für Dokumentations- und Abrechnungszwecke, obwohl hardwareseitig alle Funktionen mit nur einem einzigen Bedienterminal abgedeckt werden könnten.

Es ist die Aufgabe der vorliegenden Erfindung, das Bedienterminal so weiterzuentwickeln, dass es die Möglichkeit bietet, Anwendungssoftware über Herstellergrenzen hinweg über die Ausstattung mit Computersoftware bei Auslieferung hinausgehend nachrüsten, installieren und betreiben zu können, ohne dass die Bedienterminals in ihrer vom Hersteller vorgesehenen Funktion beeinträchtigt werden. Eine weitere Aufgabe der Erfindung ist es, den parallelen Betrieb und die gleichzeitige Ausführung von sicherheitskritischer und nicht-sicherheitskritischer Anwendungssoftware auf einem Bedienterminal zu ermöglichen. Eine weitere Aufgabe der Erfindung ist es schließlich, Anwendungssoftware weitestgehend unabhängig von der Zielplattform, d.h. dem konkreten Bedienterminal, entwickeln und installieren zu können mit dem Ziel einer schnellen und risikofreien Migration.

Die Aufgabe wird für ein gattungsgemäßes Bedienterminal gelöst, indem auf dem Bedienterminal eine Hypervisor-Software installiert ist, die daran angeschlossene Gastsysteme und die und die darin enthaltene Anwendungssoftware von der Computerhardware abstrahiert, die Kommunikation zwischen den Gastsystemen regelt und den Gastsystemen Rechenzeit der Computerhardware zuteilt, wobei die Hypervisor-Software in ihrer Systemarchitektur auf Gastsysteme
- G₂ bis Gₙ als Basis für die Anwendungssoftware des Herstellers des Bedienterminals und/oder Treiber für Schnittstellen, die anderen Partitionen nicht zur Verfügung gestellt werden sollen,
- Gx als Basis für sicherheitskritische Anwendungssoftware,
- G_{Y} als Basis für weitere Schnittstellen-Treiber, welche den übrigen Gastsystemen mit Ausnahme des Gastsystems Gx den Zugriff auf unterschiedliche Computerhard- und -softwareschnittstellen ermöglichen soll, und
- G₁ zur Nachrüstung und Nachinstallation eines weiteren vollständigen Gastsystems einschließlich der darin enthaltenen Anwendungssoftware
ausgelegt ist.

Die Hypervisor-Software wird in Fachkreisen auch als ein Virtual Machine Monitor, abgekürzt VMM, bezeichnet. Mit einem Hypervisor bezeichnet man eine Klasse von Systemen der praktischen Informatik, die als abstrahierende Schicht zwischen tatsächlich vorhandener Hardware und gegebenenfalls auf dem System bereits installiertem Betriebssystem und weiteren zu installierenden Betriebssystemen dient. Solche Systeme erlauben es eine virtuelle Umgebung der Hardwareressourcen, insbesondere der CPU, des Speichers, des Festplattenplatzes, und/oder der verfügbaren Peripherie zu definieren, die unabhängig von der tatsächlich vorhandenen Hardware als Basis für die Installation von Gast-Betriebssystemen dient. Ein Hypervisor erlaubt den Betrieb mehrerer Gastsysteme auf einem Hostsystem. Der Hypervisor verwaltet die Ressourcenzuteilung für einzelne Gastsysteme. Er verteilt die HardwareRessourcen derart, dass für jedes einzelne Gastbetriebssystem Ressourcen bei Bedarf verfügbar sind, so, als ob nur ein Betriebssystem vorhanden wäre. Dies kann durch Hardware-Emulation, Hardware-Virtualisierung oder Paravirtualisierung stattfinden. Den einzelnen Gastsystemen wird dabei vom Hypervisor jeweils ein eigener kompletter Rechner mit allen Hardware-Elementen wie beispielsweise dem Prozessor, Laufwerken, Arbeitsspeichern, usw. vorgespielt.

Durch die erfindungsgemäße Systemarchitektur einer Hypervisor-Software werden die erfindungsgemäßen Aufgaben gelöst:

Die Gastsysteme G₂ bis G_{N}, Gx und G_{Y} sowie der Hypervisor und die Hardware werden vom Hersteller des Bedienterminals erstellt. Bei einem Gastsystem handelt es sich um ein vollständiges Betriebssystem oder eine Partition mit stark reduziertem Anwendungsumfang.

Die Gastsysteme G₂ bis G_{N} dienen als Basis für die Anwendungssoftware des Herstellers des Bedienterminals sowie gegebenenfalls als Treiber für Schnittstellen, die anderen Partitionen nicht zur Verfügung gestellt werden sollen, sondern nur exklusiv von dem jeweiligen Gastsystem genutzt werden dürfen. Die Anzahl der verwendeten Gastsysteme ist dem jeweiligen Hersteller überlassen.

Das Gastsystem Gx dient als Basis für sicherheitskritische Anwendungssoftware und enthält alle für die sicherheitskritischen Software-Anwendungen notwendigen Schnittstellentreiber. In der Regel ist das zumindest einen CAN-Bus Treiber, welcher über eine Schnittstelle anderen Gastsystemen Zugriff auf die jeweilige Schnittstelle, insbesondere den CAN-Bus ermöglicht Je nach Bedarf kann das auch in einem nur beschränktem Umfang ermöglicht sein.

Das Gastsystem G_{Y} dient als Basis für weitere Schnittstellen-Treiber, welche den übrigen Gastsystemen - abgesehen von G_{X} - Zugriff auf unterschiedliche Hard- und Software-Schnittstellen ermöglicht. Dies können beispielsweise Ethernet, RS232 oder auch WLAN, LIN und Bluetooth sein. Die Ansteuerung des Displays und des Touch-Screens wäre ebenfalls möglich.

Die Architektur ermöglicht die Nachrüstung/-installation eines vollständigen Gastsystems G₁ inklusive der enthaltenen Anwendungssoftware. Dazu muss diese eine einheitliche Schnittstelle zur Kommunikation über den Hypervisor mit den Partitionen Gx und G_{Y} bereitstellen, sofern die Anwendungssoftware Zugriff auf die jeweiligen Hardware-Schnittstellen benötigt. Aufgrund der gesicherten Trennung der Gastsysteme G₁ bis Gₙ, Gx und G_{Y} durch den Hypervisor hinsichtlich Speicher und Rechenzeit kann keine Anwendungssoftware aus dem Gastsystem G₁, z.B. die Anwendung 1.A, die Ausführung der Anwendungssoftware des Bedienterminal-Herstellers, beispielsweise die Anwendung 2.B, stören.

Die Trennung von sicherheitskritischen und nicht-sicherheitskritischen Anwendungen auf einem System wird aufgrund der sicheren Trennung der einzelnen Partitionen durch den Hypervisor erfüllt.

Eine weitgehende Unabhängigkeit der Anwendungen von der Hardware wird durch den Hypervisor realisiert. Somit ist beim Austausch der Hardware im Wesentlichen der Hypervisor und gegebenenfalls die jeweiligen Schnittstellen-Treiber in den Gastsystemen anzupassen.

Bedienterminals können bei der erfindungsgemäßen Ausgestaltung der Systemarchitektur einfach und ohne die Sicherheit zu gefährden auch nachträglich um Anwendungssoftware anderer Hersteller als des Herstellers des Bedienterminals ergänzt werden. So ist beispielsweise das von einem Traktorhersteller vorinstallierte Bedienterminal mit der Hypervisor-Software ausgestattet und beinhaltet die Partitionen G₂ bis G_{N}, Gx und G_{Y}. Wenn der Hersteller eines Anbaugerätes auf diesem Bedienterminal zur optimalen Bedienung und Nutzung seines Gerätes über die vom Traktorhersteller mitgelieferte Anwendungssoftware hinaus weitere Anwendungssoftware benötigt, beispielsweise die Anwendungen 1.A und 1.B, so hat der Gerätehersteller bei Verwendung der erfindungsgemäßen Systemarchitektur auf dem Bedienterminal die Möglichkeit, durch die nachträgliche Installation des Gastsystems G₁ mit der Anwendungssoftware für die Anwendungen 1.A und 1.B dem Kunden seine Anwendungssoftware auf dem Bedienterminal des Traktorherstellers anzubieten, ohne dass die vom Traktorhersteller stammende Anwendungssoftware des Bedienterminals in der Ausführung gestört wird. Dies ist nur deshalb so einfach möglich, da kein direkter Zugriff der auf dem Bedienterminal installierten Gastsysteme auf Hardware-Schnittstellen erfolgt, sondern eine Abstraktion durch die Gastsysteme Gx und G_{Y} realisiert wird. Es ist für den Entwickler der Software für die Anwendungen 1.A und 1.B somit unerheblich, ob weitere, ihm unbekannte Anwendungssoftware auf dieselben Schnittstellen zugreift. Dies ist insbesondere für die CAN-Schnittstelle in Verbindung mit ISOBUS-kompatibler Anwendungssoftware in der Landtechnik häufig der Fall.

Der Hersteller des Bedienterminals kann durch die Verwendung der erfindungsgemäßen Systemarchitektur mit der gesicherten Trennung zwischen Gastsystemen sowohl sicherheitskritische als auch nicht-sicherheitskritische Anwendungssoftware auf demselben Bedienterminal zeitgleich ausführen, ohne Einschränkungen hinsichtlich der Sicherheit hinnehmen zu müssen. Beispielsweise sei eine Anwendungssoftware des Gastsystems G₁ mit der Anwendung 2.A eine Chat -Applikation, die es dem Bediener ermöglicht, Nachrichten von einer zentralen Logistik-Stelle zu empfangen, die den Ablauf der Arbeit im Flottenverband koordiniert. Gleichzeitig kann auf dem Gastsystem Gx eine als sicherheitskritisch eingestufte und entwickelte Anwendungssoftware laufen, die beispielsweise ein an einen Traktor angebautes Mähwerk überwacht. Ein etwaiger Fehler in der Chat-Applikation bleibt auf das Gastsystem G₁ beschränkt und kann im schlimmsten Fall zum kompletten Ausfall der Gastsystem G₁ führen, jedoch ohne die Überwachung des Mähwerks im Gastsystem Gx zu beeinträchtigen.

Der Hersteller eines Bedienterminals kann bei der Verwendung der erfindungsgemäßen Systemarchitektur auch die Hardware des Bedienterminals schnell und risikoarm gegen eine neuere, leistungsstärkere oder anderweitig besser geeignete Hardware austauschen. Die Entwicklungszyklen für landtechnische Bedienterminals werden analog zum bestehenden Trend im Consumer-Bereich immer kürzer. Bislang muss der Hersteller einen immensen Aufwand betreiben, um bestehende Anwendungssoftware auf eine neue leistungsstärkere oder aus anderen Gründen besser geeignete Hardware zu migrieren. Vor diesem Hintergrund ist es für den Hersteller des Bedienterminals besonders wichtig, bei einem Austausch der Hardware wenig oder gar keine Anpassungen an der Anwendungssoftware vornehmen zu müssen, um so erhebliche Aufwände und damit Kosten zu sparen. Die Verwendung der vorgestellten Systemarchitektur ermöglicht dies und beschränkt den Anpassungsaufwand auf den Hypervisor und ggf. die Treiber für die Hardware-Schnittstellen in den Gastsystemen. Die Anwendungssoftware und die Gastsysteme ohne direkten Zugriff auf die Hardware-Schnittstellen, nämlich die Gastsysteme G₁ und G₃ bis G_{N}, müssen in der Regel nicht angepasst werden.

Nach einer Ausgestaltung der Erfindung ist die Hypervisor-Software in ihrer Systemarchitektur auf mehrere Gastsysteme G₁₋₁ - G₁₋ₙ zur Nachrüstung und Nachinstallation eines jeweiligen weiteren vollständigen Gastsystems einschließlich der darin enthaltenen Anwendungssoftware ausgelegt. Durch die Auslegung der Hypervisor-Software auf die Nachrüstbarkeit mehrerer Gastsysteme steigt die Flexibilität und Anpassbarkeit des Bedienterminals an unterschiedliche Funktionswünsche der Kunden.

Nach einer Ausgestaltung der Erfindung hat die Anwendungssoftware des Gastsystems G₁ nur über den Hypervisor und das Gastsystem G_{X} einen mittelbaren Zugriff auf die sicherheitskritischen Funktionen der Hardware. Bei dieser Systemarchitektur erfolgt zumindest durch die Anwendungssoftware des nachträglich installierten Gastsystems G₁ kein direkter Zugriff auf Hardware-Schnittstellen des Bedienterminals, wodurch Funktionsrisiken für sicherheitskritische Funktionen der herstellerseitig installierten Computersoftware über eine Abstraktion durch das Gastsystem Gx ausgeschlossen ist.

Nach einer Ausgestaltung der Erfindung hat die Anwendungssoftware des Gastsystems G₁ nur über den Hypervisor und das Gastsystem G_{Y} einen mittelbaren Zugriff auf nicht-sicherheitskritische Schnittstellentreiber der Hardware. Bei dieser Systemarchitektur erfolgt zumindest durch die Anwendungssoftware des nachträglich installierten Gastsystems G₁ kein direkter Zugriff auf nicht-sicherheitskritische Schnittstellentreiber der Hardware des Bedienterminals, wodurch auch dort Funktionsrisiken für Funktionen der herstellerseitig installierten Computersoftware über die Abstraktion durch das Gastsystem G_{Y} ausgeschlossen ist.

Nach einer Ausgestaltung der Erfindung handelt es sich bei dem Gastsystem G₁ um ein Steuerungsprogramm zur Steuerung eines landwirtschaftlichen Geräts. Über die Organisation der Kommunikation eines Gastsystems G1 mit dem Bedienterminal über eine Hypervisor-Software ist es ohne Sicherheitsrisiken für sicherheitskritische Funktionen möglich, die Software zur Steuerung eines landwirtschaftlichen Geräts nachträglich auf einem vorhandenen Bedienterminal zu installieren und zu betreiben, ohne dass dafür gesonderte Bedienterminals in der Fahrerkabine installiert werden müssen.

Es wird ausdrücklich darauf hingewiesen, dass die vorstehend erläuterten vorteilhaften Ausgestaltungen jeweils mit dem Gegenstand des Hauptanspruchs, aber auch mit anderen vorteilhaften Ausgestaltungen beliebig kombinierbar sind, soweit dem nicht technische Hinderungsgründe entgegen stehen.

Weitere Abwandlungen und Ausgestaltungen der Erfindung lassen sich der nachfolgenden gegenständlichen Beschreibung und den Zeichnungen entnehmen.

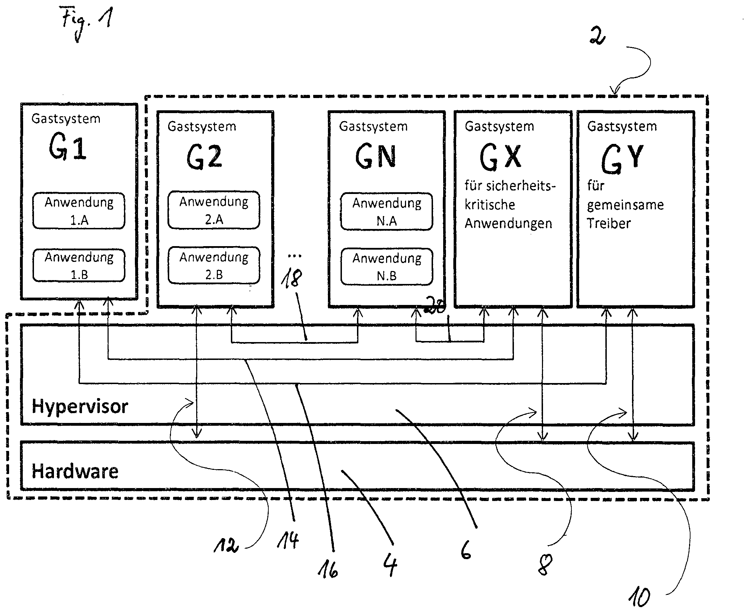

Die Erfindung soll nun anhand eines Ausführungsbeispiels näher erläutert werden. Fig. 1 zeigt ein Beispiel für eine erfindungsgemäße Systemarchitektur. Die gestrichelte Linie umgrenzt das Bedienterminal 2, das vom ursprünglichen Hersteller hergestellt und an Kunden ausgeliefert wird. Das Bedienterminal 2 umfasst die darin verbaute und vereinfachend als Kasten dargestellte Computerhardware 4, auf die die ebenfalls als Kasten vereinfacht dargestellte Hypervisor-Software 6 aufgesetzt ist.

Das Bedienterminal 2 umfasst im Ausführungsbeispiel auch die Gastsysteme G₂ - G_{N}, die die Basis bilden für die Anwendungssoftware des Herstellers des Bedienterminals 2 sowie gegebenenfalls als Treiber für Schnittstellen, die anderen Partitionen nicht zur Verfügung gestellt werden sollen, sondern nur exklusiv von dem jeweiligen Gastsystem genutzt werden dürfen. Die Gastsysteme G₂ bis G_{N} können über einen Pfad 12 einen Zugriff auf exklusive Schnittstellen, wie beispielsweise einen speziellen RS232-Anschluss haben, wie es im Ausführungsbeispiel für das Gastsystem G₂ gezeigt ist.

Das Gastsystem G₁ ist ein nachinstalliertes Gastsystem, das Anwendungssoftware für alle zusätzlichen Anwendungen beinhaltet, die zur Bedienung und Steuerung der mit diesem Gastsystem G₁ verbundenen Maschine nötig oder auch nur vorteilhaft sind. Das Gastsystem G₁ greift nicht direkt auf die Hardware 4 des Bedienterminals 2 zu, der Zugriff erfolgt nur mittelbar über den Hypervisor 6 und die damit verbundenen vom Hersteller des Bedienterminals 2 vorgesehenen Gastsysteme G_{X} und G_{Y}. Im Ausführungsbeispiel greift das Gastsystem G_{X} für sicherheitskritische Anwendungen direkt über den Pfad 8 auf die Hardware 4 zu, wie beispielsweise auf einen CAN Bus als Bestandteil der Hardware 4, und das Gastsystem G_{Y} greift über den Pfad 10 für gemeinsame Treiber auf die Hardware 4 zu, wie beispielsweise für einen Zugriff auf sonstige Schnittstellen wie Ethernet, WLAN oder Bluetooth.

Die Funktionsweise der Kommunikation der unterschiedlichen Gastsysteme miteinander sowie der Zugriff auf die Hardware-Schnittstellen anderer Gastsysteme zur Hardware 4 des Bedienterminals 2 über die Hypervisor-Software 6 wird anhand der folgenden Beispiele näher erläutert:

Die Anwendung A.1 im Gastsystem G₁ benötigt Informationen/Daten vom CAN-Bus und will selbst Informationen beziehungsweise Daten auf den CAN-Bus senden. Die Kommunikation der Anwendung A.1 im Gastsystem G₁ mit dem CAN-Bus erfolgt über den Pfad 14, der im Ausführungsbeispiel als eine generische bidirektionale Kommunikationsschnittstelle zum Hypervisor 6 ausgebildet ist. Diese Kommunikationsschnittstelle stellt eine direkte Verbindung - Punkt-zu-Punkt - zwischen den Gastsystemen G₁ und G_{X} her, auf dem ausschließlich CAN-Bus Daten ausgetauscht werden. Für weitere Schnittstellen, wie beispielsweise Ethernet, müsste eine weitere generische Kommunikationsschnittstelle in gleicher Weise erstellt werden, beispielsweise über den Pfad 16 vom Gastsystem G₁ zum Gastsystem G_{Y}.

Um Daten auf den CAN-Bus zu senden, sendet die Anwendung A.1 im Gastsystem G₁ zunächst Daten zur generischen Schnittstelle auf dem Hypervisor 6. Der Hypervisor 6 nimmt die Daten entgegen und leitet diese über eine Schnittstelle zum Gastsystem G_{X} weiter. Diese Kommunikationsstrecke entspricht dem Pfad 14 in Fig. 1. Das Gastsystem G_{X} nimmt die empfangenen Daten entgegen und leitet diese über den Pfad 8 an den CAN-Bustreiber, der Bestandteil der Hardware 4 ist, weiter. Der CAN-Bustreiber selbst übernimmt dann das eigentliche Senden der Daten auf dem CAN-Bus.

Der Empfang von CAN-Bus Daten läuft genau entgegengesetzt: Der CAN-Bustreiber der Hardware 4 nimmt die Daten aus dem CAN-Busnetz entgegen und reicht diese an das Gastsystem G_{X} weiter. Das Gastsystem G_{X} leitet die Daten anschließend über die generische Kommunikationsschnittstelle des Pfads 14 des Hypervisors 6 weiter, der die Daten dann wiederum an das Gastsystem G₁ weiterreicht. Im Gastsystem G₁ werden die CAN-Bus Daten der Anwendung A.1 zur Verfügung gestellt.

Um eine unnötige Prozessorbelastung durch die Kommunikation zwischen den verschiedenen Gastsystemen G₁ und G_{X} über den Hypervisor 6 zu vermeiden, werden nur die von der Anwendung A.1 benötigten Daten über den Hypervisor 6 kommuniziert. Die Anwendung A.1 teilt dazu dem Gastsystem G_{X} die benötigten Daten in Form einer Kennung mit. Im Rahmen der ISOBUS-Kommunikation ist eine sinnvolle Kennung die "Parameter Group Number" (PGN), zu der sich Regelungen in den Normenwerken ISO11783 und J1939 finden. In diesem Fall würde das Gastsystem G_{X} bzw. der CAN-Bustreiber nur die angefragten, also benötigten PGNs über den Hypervisor 6 an das Gastsystem G₁ weiterleiten.

Analog gilt das gleiche Konzept auch für den Zugriff des Gastsystems G_{X} auf andere Hardwareschnittstellen. Insbesondere ist die Kommunikation mit einem Ethernetbasierten Netzwerk in ähnlicher Weise möglich, erfordert aber systembedingte Anpassungen. Des Weiteren erfolgt der Zugriff auf Hardware-Schnittstellen des Gastsystems G_{Y} durch die Anwendungen des Gastsystems G₁ in ähnlicher Weise.

Die hier dargelegte Kommunikation über den Hypervisor 6 zwischen einer Anwendung im Gastsystem G₁ mit dem CAN-Bus, welcher am Gastsystem G_{X} angeschlossen ist, funktioniert so auch für Anwendungen aus anderen Gastsystemen, die auf die Hardware 4 für sicherheitskritische Anwendungen zugreifen wollen, beispielsweise über den Pfad 20. Auch die Kommunikation zwischen verschiedenen Gastsystemen G₂ - G_{N} untereinander über den Hypervisor 6, soweit erforderlich, kann über einen entsprechenden Pfad 18 erfolgen.

Für analoge Hardwareschnittstellen, die z.B. an Gastsystem G_{Y} angeschlossen sind, werden diese zunächst vom Gastsystem G_{Y} in digitale Werte gewandelt und interpretiert. Die interpretierten Werte werden dann über eine generische Kommunikationsschnittstelle über den Pfad 16 dem Gastsystem G₁ zur Verfügung gestellt.

Für bestimmte Daten kann eine uni-direktionale Kommunikationsschnittstelle ausreichen. In diesem Fall leitet das Gastsystem G_{Y} die Daten an eine uni-direktionale Hypervisor-Schnittstelle weiter, die mehrere Gastsysteme auslesen können. So werden mehrfache bi-direktionale Kommunikationsschnittstellen über den Hypervisor 6 vermieden und die Daten effizient den Gastsystemen zur Verfügung gestellt.

Die Erfindung ist nicht auf das vorstehende Ausführungsbeispiel beschränkt. Dem Fachmann bereitet es keine Schwierigkeiten, das Ausführungsbeispiel auf eine ihm als geeignet erscheinende Weise abzuwandeln, um es an einen konkreten Anwendungsfall anzupassen.

## Patentansprüche

1. Bedienterminal (2) einer Landmaschine mit einer Computerhardware (4) und einer Computersoftware zur Bedienung der elektrischen und/oder elektronischen Funktionen der angeschlossenen Landmaschine, **dadurch gekennzeichnet, dass** auf dem Bedienterminal (2) eine Hypervisor-Software (6) installiert ist, die daran angeschlossene Gastsysteme und die darin enthaltene Anwendungssoftware von der Computerhardware (4) abstrahiert, die Kommunikation zwischen den Gastsystemen regelt und den Gastsystemen Rechenzeit der Computerhardware (4) zuteilt, wobei die Hypervisor-Software (6) in ihrer Systemarchitektur auf Gastsysteme
- G₂ bis Gₙ als Basis für die Anwendungssoftware des Herstellers des Bedienterminals und/oder Treiber für Schnittstellen, die anderen Partitionen nicht zur Verfügung gestellt werden sollen,
- G_{X} als Basis für sicherheitskritische Anwendungssoftware,
- G_{Y} als Basis für weitere Schnittstellen-Treiber, welche den übrigen Gastsystemen mit Ausnahme des Gastsystems Gx den Zugriff auf unterschiedliche Computerhard- und -softwareschnittstellen ermöglichen soll, und
- G₁ zur Nachrüstung und Nachinstallation eines weiteren vollständigen Gastsystems einschließlich der darin enthaltenen Anwendungssoftware
ausgelegt ist.

2. Bedienterminal (2) nach Anspruch 1, **dadurch gekennzeichnet, dass** die Hypervisor-Software (6) in ihrer Systemarchitektur auf mehrere Gastsysteme G₁₋₁ - G₁₋ₙ zur Nachrüstung und Nachinstallation eines jeweiligen weiteren vollständigen Gastsystems einschließlich der darin enthaltenen Anwendungssoftware ausgelegt ist.

3. Bedienterminal (2) nach Anspruch 1 oder 2, **dadurch gekennzeichnet, dass** die Anwendungssoftware des Gastsystems G₁ nur über den Hypervisor (6) und das Gastsystem Gx einen mittelbaren Zugriff auf die sicherheitskritischen Funktionen der Hardware (4) hat.

4. Bedienterminal (2) nach einem der vorhergehenden Ansprüche, **dadurch gekennzeichnet, dass** die Anwendungssoftware des Gastsystems G₁ nur über den Hypervisor (6) und das Gastsystem G_{Y} einen mittelbaren Zugriff auf nicht-sicherheitskritische Schnittstellentreiber der Hardware (4) hat.

5. Bedienterminal (2) nach einem der vorhergehenden Ansprüche, **dadurch gekennzeichnet, dass** es sich bei dem Gastsystem G₁ um ein Steuerungsprogramm zur Steuerung eines landwirtschaftlichen Geräts handelt.

## Claims

1. Operating terminal (2) of an agricultural machine comprising computer hardware (4) and computer software for operating the electrical and/or electronic functions of the connected agricultural machine, **characterised in that** hypervisor software (6) is installed on the operating terminal (2), which software abstracts the guest systems connected thereto and the application software contained therein from the computer hardware (4), controls the communication between the guest systems, and allocates computing time of the computer hardware (4) to the guest systems, the system architecture of the hypervisor software (6) being configured for guest systems
- G₂ to Gₙ, as a basis for the application software of the manufacturer of the operating terminal and/or drivers for interfaces that are not to be made available to other partitions,
- G_{X}, as a basis for safety-critical application software,
- G_{Y}, as a basis for additional interface drivers which are to enable the other guest systems, with the exception of the guest system G_{X}, to access different computer hardware and software interfaces, and
- G₁, for retrofitting and retro-installation of an additional complete guest system, including the application software contained therein.

2. Operating terminal (2) according to claim 1, **characterised in that** the system architecture of the hypervisor software (6) is configured for a plurality of guest systems G₁₋₁-G₁₋ₙ, for retrofitting and retro-installation of respective additional complete guest systems, including the application software contained therein.

3. Operating terminal (2) according to either claim 1 or claim 2, **characterised in that** the application software of the guest system G₁ has indirect access to the safety-critical functions of the hardware (4) only via the hypervisor (6) and the guest system G_{X}.

4. Operating terminal (2) according to any of the preceding claims, **characterised in that** the application software of the guest system G₁ has indirect access to non-safety-critical interface drivers of the hardware (4) only via the hypervisor (6) and the guest system G_{Y}.

5. Operating terminal (2) according to any of the preceding claims, **characterised in that** the guest system G₁ is a control program for controlling an agricultural device.

## Revendications

1. Terminal de commande (2) d'une machine agricole comprenant un matériel informatique (4) et un logiciel destiné à commander des fonctions électriques et/ou électroniques de la machine agricole raccordé au terminal de commande, **caractérisé en ce qu'**un logiciel hyperviseur (6) est installé sur le terminal de commande (2), distinguent les systèmes hôtes raccordés et les logiciels d'application contenus du matériel informatique (4), régulent la communication entre les systèmes hôtes et attribuent aux systèmes hôtes le temps de calcul du matériel informatique (4), le logiciel hyperviseur (6) étant adapté quant à son architecture système à des systèmes hôtes
- G₂ à Gn comme base pour le logiciel d'application du fabricant du terminal de commande et/ou comme pilotes pour les interfaces qui ne doivent pas être mises à la disposition d'autres partitions,
- Gₓ comme base pour les logiciels d'application critiques en termes de sécurité,
- G_{y} comme base pour d'autres pilotes d'interface qui doivent permettre aux autres systèmes hôtes, à l'exception du système hôte Gₓ, d'accéder à différentes interfaces matérielles et logicielles, et
- G₁ pour la mise à niveau et la réinstallation d'un autre système hôte complet, y compris le logiciel d'application contenu.

2. Terminal de commande (2) selon la revendication 1, **caractérisé en ce que** le logiciel hyperviseur (6) est adapté quant à son architecture système à plusieurs systèmes hôtes G₁₋₁ à G1-n pour la mise à niveau et la réinstallation d'un autre système hôte complet respectif, y compris le logiciel d'application qu'il contient.

3. Terminal de commande (2) selon la revendication 1 ou 2, **caractérisé en ce que** le logiciel d'application du système hôte G₁ a un accès indirect à des fonctions du matériel (4), qui sont critiques en termes de sécurité, seulement par le biais de l'hyperviseur (6) et du système hôte Gₓ.

4. Terminal de commande (2) selon l'une des revendications précédentes, **caractérisé en ce que** le logiciel d'application du système hôte G₁ a un accès indirect au pilote d'interface, non critique en terme de sécurité, du matériel (4) seulement par le biais de l'hyperviseur (6) et du système hôte G_{y}.

5. Terminal de commande (2) selon l'une des revendications précédentes, **caractérisé en ce que** le système hôte G₁ est un programme de commande destiné à commander un appareil agricole.
